# EUROPÄISCHE PATENTSCHRIFT

(11) **EP 2 871 737 B1**
(45) Veröffentlichungstag und Bekanntmachung des Hinweises auf die Patenterteilung: **17.01.2018**
(21) Anmeldenummer: 14191890.4
(22) Anmeldetag: 05.11.2014
(51) Int. Cl.: H02G 1/12, H01R 43/05

(54) **Abisoliervorrichtung und -Verfahren**
Insulation stripping device and method
Dispositif et procédé de dénudage

(30) Priorität: 08.11.2013 DE 102013018834
(43) Veröffentlichungstag der Anmeldung: 13.05.2015
(73) Patentinhaber: Komax SLE GmbH & Co. KG, 94481 Grafenau (DE)
(72) Erfinder: Haslinger, Thomas, 94575 Windorf (DE)
(74) Vertreter: Kramer Barske Schmidtchen Patentanwälte PartG mbB

(56) Entgegenhaltungen:
- EP-A2- 1 258 960
- EP-A2- 2 190 080
- DE-A1- 2 654 766
- DE-A1- 19 752 452
- DE-C1- 4 325 356
- JP-A- H03 226 211
- JP-A- H10 322 833
- US-A- 3 774 478

## Beschreibung

Die vorliegende Erfindung betrifft eine Vorrichtung und ein Verfahren zum gleichzeitigen Abisolieren mindestens zweier von Isolationsmaterial umgebenen Kabelenden.

Aus der EP 1 528 643 A1 ist eine Konfektionierungsvorrichtung bekannt, bei der ein Messerkopf einer Messereinheit das Kabelende zum Entfernen der Isolation einschneidet und Kontakte mit mangelnder Crimpverbindung vom Kabelende trennt.

Aus der DE 197 52 452 A1 ist ein Drahtschneide- und Abisoliermechanismus bekannt, bei dem ein isolierter einadriger Endlosdraht zu Drahtstücken mit vorbestimmter Länge geschnitten werden kann. Die beim Schneiden entstehenden Enden, d.h., ein Ende des abgeschnittenen Drahtes und ein Ende des Endlosdrahtes werden nach dem Schneiden gleichzeitig durch Bewegen der entsprechenden Drahtenden in Drahtrichtung abisoliert.

Weitere Abisoliervorrichtungen sind aus der JP H03 226211 A, US 3 774 478 A, DE 26 54 766 A1, EP 1 258 960 A2, JP H10 322833 A, DE 43 25 356 C1 und EP 2 190 080 A2 bekannt.

Eine Aufgabe der vorliegenden Erfindung ist es, ein Abisolieren oder ein Abisolieren und Crimpen mindestens zweier von Isolationsmaterial umgebener im Wesentlichen parallel verlaufender Kabelenden zu erleichtern und zu beschleunigen.

Diese Aufgabe wird gelöst mit den Merkmalen der unabhängigen Patentansprüche 1 und 7. Weiterbildungen der Erfindung sind in den abhängigen Ansprüchen angegeben.

Mit den beanspruchten Merkmalen wird beispielsweise erreicht, dass die Geschwindigkeit, mit der zwei Kabelenden vor einem Crimpvorgang abisoliert werden, deutlich erhöht werden kann. Des Weiteren kann auch der Crimpprozess selbst deutlich beschleunigt werden, da die abisolierten Kabelenden bereits in der für das Crimpen notwendigen Position angeordnet sind.

Weitere Merkmale und Zweckmäßigkeiten ergeben sich aus der Beschreibung von Ausführungsbeispielen und anhand der Figuren. Von den Figuren zeigen
Fig. 1 eine Aufsicht auf Teile einer Abisolier- und Crimpvorrichtung gemäß einer ersten Ausführungsform,
Fig. 2 eine Seitenansicht auf Teile der Abisolier- und Crimpvorrichtung gemäß der ersten Ausführungsform,
Fig. 3A bis 3E verschiedene Ansichten eines ersten Messers der Abisoliervorrichtung gemäß der ersten Ausführungsform,
Fig. 4A bis 4D verschiedene Ansichten eines zweiten Messers der Abisoliervorrichtung gemäß der ersten Ausführungsform,
Fig. 5A bis 5D verschiedene Messerpositionen der Abisoliervorrichtung, in Fig. 5A und 5B geöffnete Messerpositionen, in Fig. 5C eine Abisolier-Messerposition, und in Fig. 5D eine geschlossene Messerposition, und
Fig. 6A und 6B verschiedene Ansichten einer Führungsvorrichtung der Abisoliervorrichtung gemäß der ersten Ausführungsform.

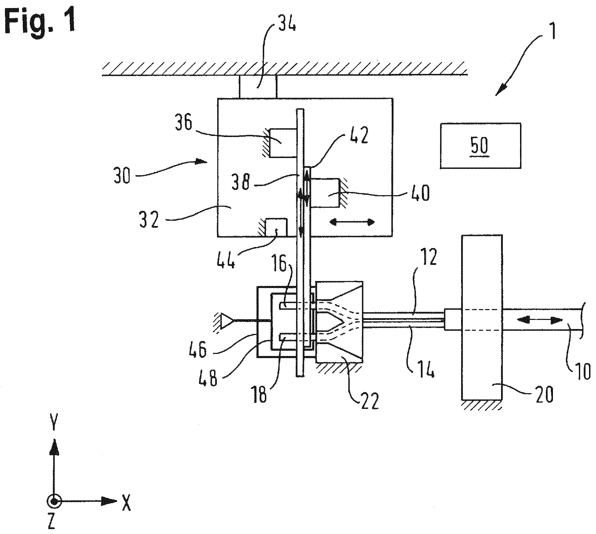

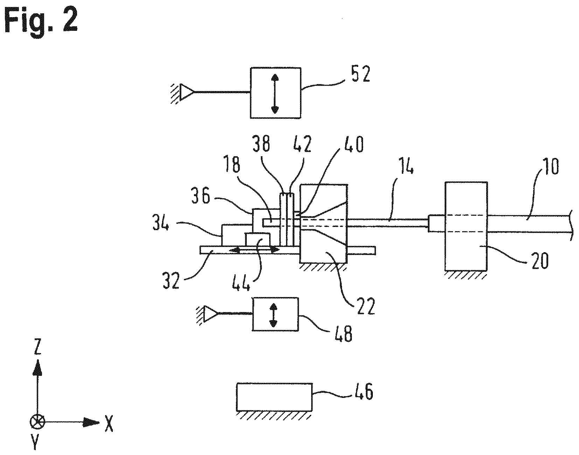

Fig. 1 zeigt eine schematische Aufsicht auf Teile einer Vorrichtung 1 zum Abisolieren und Crimpen gemäß einer ersten Ausführungsform. Fig. 2 zeigt eine schematische Seitenansicht der Vorrichtung 1. Im Folgenden werden zuerst die Bauteile und Merkmale der Vorrichtung 1 zum Abisolieren und Crimpen beschrieben, mit denen die gleichzeitige Abisolierung zweier Kabelenden erreicht wird.

Fig. 1 zeigt eine mehradrige elektrische Leitung 10, die ein erstes Isolierkabel 12 (erste Ader bzw. erster Leiter) und ein zweites Isolierkabel 14 (zweite Ader bzw. zweiter Leiter) aufweist. Die Isolierkabel 12, 14 verlaufen in einem Schutzmantel im Wesentlichen parallel zueinander in der elektrischen Leitung 10. In dem Endbereich ist kein Schutzmantel vorhanden. Jedes Isolierkabel 12, 14 ist von einer Hülle aus Isolationsmaterial zur Isolierung zu der Umgebung umgeben. Das erste Isolierkabel 12 endet in einem ersten Kabelende 16 und das zweite Isolierkabel 14 endet in einem zweiten Kabelende 18.

In Fig. 1 ist schematisch eine Kabeleinspann- bzw. Festhaltevorrichtung 20 gezeigt, mit der die elektrische Leitung 10 oder die Isolierkabel 12, 14 festgehalten bzw. eingespannt werden können. Beispielsweise kann die Festhaltevorrichtung 20 aus aufeinander zu beweglichen Einspannbacken bestehen, mit denen die elektrische Leitung 10 oder die Isolierkabel 12, 14 bzw. deren Kabelenden 16, 18 zwischen denselben eingespannt wird bzw. werden.

Des Weiteren zeigt Fig. 1 eine Führungsvorrichtung 22, die später detaillierter beschrieben werden wird. Die Führungsvorrichtung 22 ist dazu ausgebildet, dass die Kabelenden 16, 18 der Isolierkabel 12, 14 in einer vorbestimmten Position und in einem vorbestimmten Abstand zueinander gehalten werden können.

Fig. 1 zeigt weiter eine Schneidevorrichtung 30, mit der die Kabelenden 16, 18 abisoliert und/oder abgeschnitten werden können. Die Schneidevorrichtung 30 weist eine Basisplatte 32 auf, die mittels einer ersten Antriebsvorrichtung 34 in einer parallel zu den Kabelenden 16, 18 verlaufenden Richtung (in Fig. 1 in einer X-Richtung) bewegbar ist. Auf der Basisplatte 32 ist als Teil der Schneidevorrichtung eine zweite Antriebsvorrichtung 36 angebracht. Mit der zweiten Antriebsvorrichtung 36 kann ein erstes Messer 38 in einer zu der Richtung der Kabelenden 16, 18 senkrecht verlaufenden Richtung (in Fig. 1 in einer Y-Richtung) bewegt und geführt werden. Das erste Messer 38 kann beispielsweise mittels einer Schiene oder Nut (nicht gezeigt), die auf der Basisplatte 32 vorhanden ist, geführt werden. Die Bewegung in der Y-Richtung kann beispielsweise mittels einen Zahnstangen- oder Schneckenantriebs (nicht gezeigt) erreicht werden. Des Weiteren wird auf der Basisplatte 32 auf ähnliche Weise ein zweites Messer 42 mittels einer dritten Antriebsvorrichtung 40 ebenfalls in einer Richtung senkrecht zu der Richtung der Kabelenden bewegbar gehalten oder geführt. Das erste und zweite Messer 38, 42 sind bevorzugt so relativ zueinander angeordnet, dass sie einander berühren. Die relativen Positionen des ersten und zweiten Messers 38, 42 und deren genaue Ausgestaltung wird später genauer beschrieben. Mittels der Messer 38, 42 ist es möglich, das erste Kabelende 16 und das zweite Kabelende 18 gleichzeitig abzuisolieren und/oder gleichzeitig abzuschneiden.

Auf der Basisplatte 32 ist bevorzugt ein Sensor 44 angeordnet, mit dem erfasst werden kann, ob die Kabelenden 16, 18 mit einer vorbestimmten Kabellänge von der Führungsvorrichtung 22 zu den Messern 38, 42 vorstehen. Alternativ oder zusätzlich kann der Sensor 44 beispielsweise erfassen, mit welcher Länge die Kabelenden 16, 18 von der dem Sensor 44 zugewandten Seite des ersten Messers 38 vorstehen.

Des Weiteren zeigt Fig. 1 schematisch eine Isolationsmaterialauffangwanne 46 und einen Mehrfachcrimpamboss (hier Doppelcrimpamboss) 48. Zusätzlich ist in Fig. 1 schematisch eine Steuerungsvorrichtung 50 gezeigt, die mit der Festhaltevorrichtung 20, der ersten Antriebsvorrichtung 34, der zweiten Antriebsvorrichtung 36, der dritten Antriebsvorrichtung 40 und dem Sensor 44 verbunden ist.

Fig. 2 zeigt eine vereinfachte schematische Seitenansicht der in Fig. 1 gezeigten Vorrichtung. Zusätzlich zu Fig. 1 zeigt Fig. 2 schematisch einen Mehrfachcrimpstempel (hier Doppelcrimpstempel) 52, der, wie aus Fig. 2 ersichtlich, zum gleichzeitigen Crimpen von mehreren Crimpverbindern bzw. Crimphülsen auf die Kabelenden 16, 18 vertikal verfahrbar ist. Wie weiter aus Fig. 2 ersichtlich ist, ist auch der Mehrfachcrimpamboss 48 so ausgebildet, dass er für den Crimpvorgang vertikal verfahrbar ist. Der Mehrfachcrimpamboss 48 und Mehrfachcrimpstempel 52 arbeiten zum Crimpen zusammen. Es ist zu beachten, dass Fig. 2 der Übersichtlichkeit halber nicht alle in Fig. 1 dargestellten Komponenten zeigt (beispielsweise sind die Antriebsvorrichtungen 34, 36 und 40 in Fig. 2 nicht gezeigt). Sowohl die Bewegung des Mehrfachcrimpamboss 48 als auch des Mehrfachcrimpstempels 52 können über die Steuerungsvorrichtung 50 gesteuert werden.

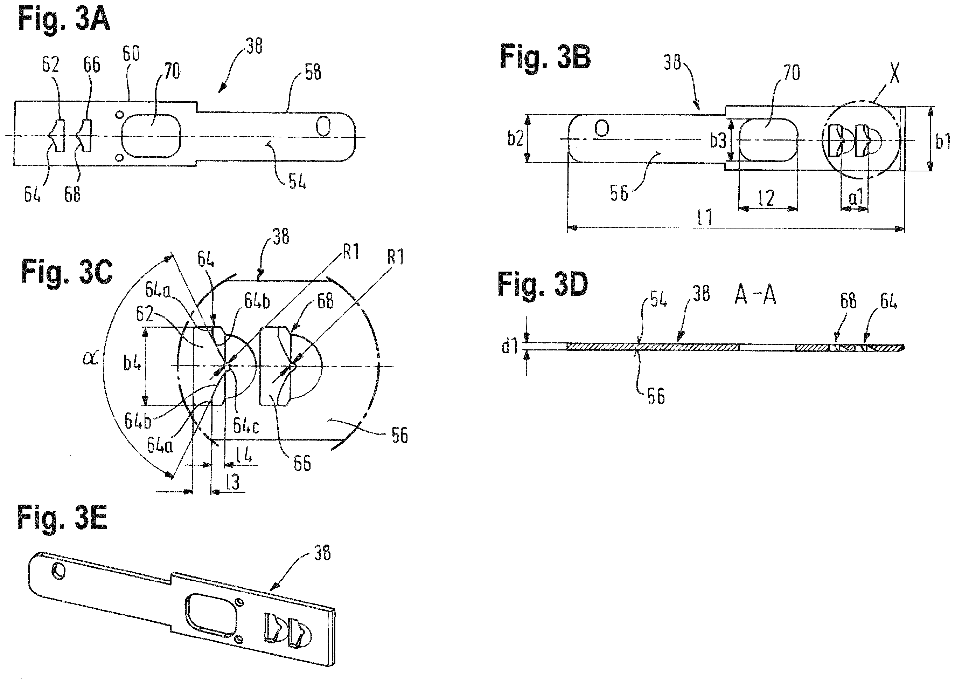

Fig. 3A bis 3E zeigen verschiedene Ansichten des ersten Messers 38. Das erste Messer 38 ist aus einer insgesamt rechteckigen Platte mit einer ersten Länge 11 und einer ersten Breite b1 ausgebildet. Die rechteckige Platte weist eine Vorderfläche 54 (in Fig. 3A gezeigt) und eine Rückfläche 56 (in Fig. 3B) gezeigt) auf. Des Weiteren ist das erste Messer 38 in seiner Längsausrichtung in einen Führungsbereich 58 und einen Schneidebereich 60, die in dieser Ausführungsform eine Länge von jeweils ungefähr ½ x 11 aufweisen, aufgeteilt. Der Führungsbereich 58 weist eine zweite Breite b2 auf. Der Schneidebereich 60 weist die erste Breite b1 auf. Das erste Messer 38 weist eine erste Dicke d1 auf.

In dem Schneidebereich 60 des ersten Messers 38 sind drei Ausbrüche ausgebildet. Ein erster Ausbruch 62 ist im Wesentlichen rechteckförmig und weist eine vierte Breite b4 und eine dritte Länge 13 auf. Der erste Ausbruch 62 ist am weitesten weg von dem Führungsbereich 58 angeordnet. Durch den ersten Ausbruch 62 wird eine erste Schneidekante 64 ausgebildet. Die erste Schneidekante 64 ist an der Vorderfläche 54 des ersten Messers 54 auf der Seite des ersten Ausbruchs 62 ausgebildet, die am weitesten weg von dem Führungsbereich 58 angeordnet ist. Die erste Schneidekante 64 wird bevorzugt dadurch ausgebildet, dass nach dem Ausbilden, beispielwiese durch Schneiden oder Stanzen, des ersten Ausbruchs 62 die Seite des Rands des erstes Ausbruchs 62, die entfernt von dem Führungsbereich 58 angeordnet ist, nur von der Rückfläche 56 her angeschliffen bzw. abgeschliffen wird. Dadurch wird in diesem Bereich die erste Schneidekante 64 ausgebildet, die mit der Vorderfläche 54 im Wesentlichen in einer Ebene liegt.

Eine vergrößerte Ansicht der ersten Schneidekante 64 ist in Fig. 3C dargestellt. Wie aus Fig. 3C ersichtlich ist, verläuft die erste Schneidekante 64 insgesamt symmetrisch bezüglich einer in der Längsrichtung und Dickenrichtung des ersten Messers 38 mittig durch den ersten Ausbruch 62 verlaufenden Symmetrieebene. Genauer gesagt, die erste Schneidekante 64 verläuft zunächst von dem oberen/unteren Randbereich in Breitenrichtung des ersten Ausbruchs 62 senkrecht zu der Längsrichtung des ersten Messers 38 in Richtung Mitte (senkrechter Schneidekantenbereich bzw. Randbereich 64a). Anschließend verläuft die erste Schneidkante 64 durch stärkeres Ausschleifen schräg in Richtung Mitte und weg von dem Führungsbereich (V-förmiger Schneidekantenbereich 64b). In einem Mittenbereich (durch den auch die Symmetrieebene verläuft) ist die erste Schneidekante 64 in Form eines Halbkreises ausgebildet, der in Richtung zu dem Führungsbereich 58 geöffnet ist (halbkreisförmiger Schneidekantenbereich 64c). Der weitere Verlauf ist symmetrisch ausgebildet. Somit weist die erste Schneidekante 64 insgesamt senkrecht zu der Längsrichtung verlaufende Randbereiche 64a und einen schräg nach innen zulaufenden V-förmigen Bereich 64b, der einen halbkreisförmigen Mittelbereich 64c aufweist, auf. Die Hauptschneiderichtung, in der das erste Messer 38 schneidet, verläuft in Längsrichtung des ersten Messers 38 von dem Schneidebereich 60 in Richtung zu dem Führungsbereich 58. D.h., zum Schneiden wird das erste Messer in Richtung von dem Schneidebereich 60 zu dem Führungsbereich 58 bewegt. Der V-förmige Bereich ist in Richtung zu dem Führungsbereich 58 mit einem ersten Winkel α geöffnet, d.h., die V-Seiten weisen den ersten Winkel α zueinander auf. Der Halbkreis weist einen ersten Radius R1 auf. Der V-förmige Bereich erstreckt sich in der Längsrichtung mit einer vierten Länge 14.

Im Wesentlichen identisch zu dem ersten Ausbruch 62 ist in Richtung zu dem Führungsbereich 58 hin versetzt ein zweiter Ausbruch 66 ausgebildet. Mit dem zweiten Ausbruch 66 wird ähnlich zu dem ersten Ausbruch 62 eine zweite Schneidekante 68 auf der Vorderfläche 54 des ersten Messers 38 ausgebildet. Der erste und der zweite Ausbruch 62, 66 sind so angeordnet, dass jeweils einander entsprechende Positionen der Schneidekanten 64, 68 einen ersten Abstand (auch als Pitch bezeichnet) a1 in Längsrichtung zueinander aufweisen. Insbesondere weisen die Mittelpunkte der Halbkreisförmigen Schneidekanten in dem mittleren Bereich der Schneidekanten den ersten Abstand (Mittelabstand) a1 auf

Das erste Messer 38 weist weiter einen dritten Ausbruch 70 auf, der bezüglich des ersten und zweiten Ausbruchs 62, 66 weiter in Richtung zu dem Führungsbereich 58 hin versetzt ausgebildet ist. Der dritte Ausbruch weist eine dritte Breite b3 und eine zweite Länge 12 auf. Des Weiteren sind in dem Führungsbereich 58 weitere Ausbrüche und/oder Bohrungen vorgesehen, mit denen das erste Messer 38 mit der zweiten Antriebsvorrichtung 36 verbunden werden kann. Figuren 3D und 3E zeigen weitere Ansichten des ersten Messers 38.

Das so ausgebildete erste Messer 38 ist in der zusammengebauten Abisoliervorrichtung, wie in Fig. 1 gezeigt, so angeordnet, dass die Längsrichtung in der Y-Richtung, d.h., senkrecht zu der Richtung der Kabelenden 16, 18 verläuft und die Breitenrichtung des Messers in der Z-Richtung verläuft, die senkrecht zu der X-Richtung und senkrecht zu der Y-Richtung ist. Des Weiteren zeigt die Vorderfläche 54 des ersten Messers 38 auf das zweite Messer 42 bzw. auf die Führungsvorrichtung 22.

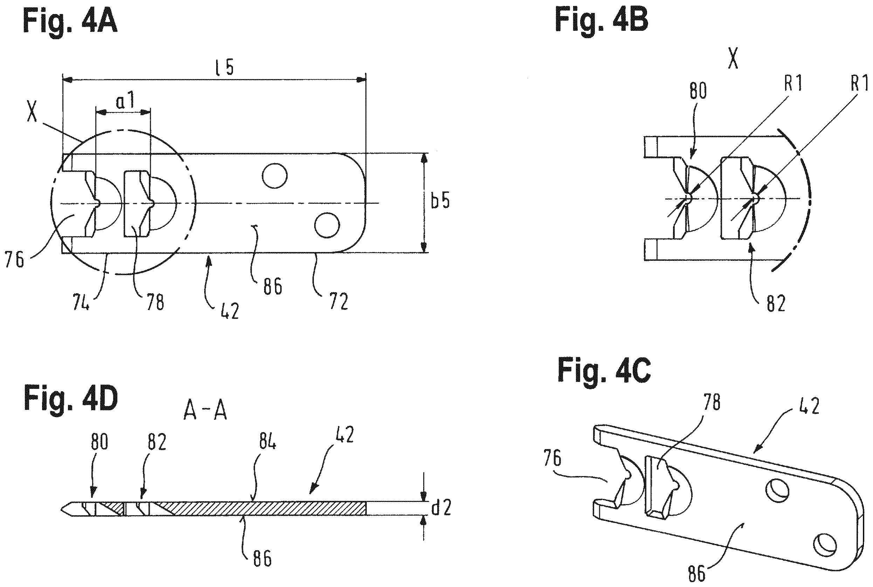

Fig. 4A bis 4D zeigen verschiedene Ansichten des zweiten Messers 42. Das zweite Messer 42 ist aus einer insgesamt rechteckigen Platte mit einer fünften Länge 15 und einer fünften Breite b5 und einer zweiten Dicke d2 ausgebildet. Das zweite Messer 42 weist ähnlich zu dem ersten Messer 38 einen Führungsbereich 72 und einen Schneidebereich 74 auf (deren Breiten in dieser Ausführungsform gleich sind). In dem Schneidebereich 74 sind durch einen dritten Ausbruch 76 und einen vierten Ausbruch 78 im Wesentlichen auf dieselbe Weise wie bei dem ersten Messer 38 eine dritte Schneidekante 80 und eine vierte Schneidekante 82 ausgebildet. Die dritte und vierte Schneidekante 80, 82 sind im Gegensatz zu dem ersten Messer 38 spiegelverkehrt bezüglich einer Achse senkrecht zu der Längsrichtung der Messer auf der Seite jedes Ausbruchs 76, 78 angeordnet, die näher an dem Führungsbereich 72 liegt. Die dritte und vierte Schneidekante 80, 82 liegen in einer Ebene mit einer Rückfläche 84. Dies wird erreicht, indem die Schneidekanten 80, 82 durch Abschleifen der Ränder der Ausbrüche 76, 78 ausgehend von einer Vorderfläche 86 ausgebildet werden. Des Weiteren ist der dritte Ausbruch 76 im Randbereich des zweiten Messers 42 so ausgebildet, dass er in der Längsrichtung geöffnet ist. D.h., der dritte Ausbruch 76 ist im Wesentlichen C-förmig geöffnet ausgebildet. Die Hauptschneiderichtung, in der das zweite Messer 42 schneidet, verläuft in Längsrichtung des zweiten Messers 42 von dem Führungsbereich 72 in Richtung zu dem Schneidebereich 74.

Der Abstand der dritten Schneidekante 80 und der vierten Schneidekante 82 des zweiten Messers 42 in der Längsrichtung entspricht dem ersten Abstand a1 zwischen der ersten Schneidekante 64 und der zweiten Schneidekante 68 des ersten Messers 38. Der Führungsbereich 72 weist in dieser Ausführungsform beispielhaft zwei Ausbrüche bzw. Bohrungen zur Befestigung an der dritten Antriebsvorrichtung 40 auf.

Das zweite Messer wird bevorzugt so in die in Fig. 1 und 2 gezeigte Schneidevorrichtung 30 eingebaut, dass die Rückfläche 84 des zweiten Messers 42 auf der Vorderfläche 54 des ersten Messers 38 gleiten kann. Das heißt, das erste Messer 38 und das zweite Messer 42 werden durch die Antriebsvorrichtungen 36, 40 und optionale Führungseinrichtungen, wie beispielsweise Schienen so aufeinander gehalten, dass die Seiten, auf denen die jeweiligen Schneidekanten 64, 68, 80, 82 angeordnet sind, aufeinander gleiten. Die Schneidekanten 64, 68, 80, 82 sind daher im Wesentlichen koplanar, das heißt in einer Ebene angeordnet. Alternativ können die beiden Messer sehr nahe aneinander geführt werden. Die erste und zweite Schneidekante 64, 68 des ersten Messers 38 sind so angeordnet, dass ihre Hauptschneiderichtung entgegengesetzt zu der Hauptschneidrichtung der dritten und vierten Schneidekante 80, 82 des zweiten Messers 42 verlaufen. Mit anderen Worten, die Schneidekanten 64, 68 des ersten Messers 38 schneiden in Fig. 1 in positiver Y-Richtung, während die Schneidekanten 80, 82 des zweiten Messers 42 in Fig. 1 in negativer Y-Richtung schneiden. Das erste Messer 38 und das zweite Messer 42 sind relativ zueinander so angeordnet, dass durch eine relative Bewegung der Messer 38, 42 zueinander die erste Schneidekante 64 und die dritte Schneidekante 80 und zweite Schneidekante 68 und die vierte Schneidekante 82 jeweils zum Einschneiden in ein Kabelende zusammenwirken können.

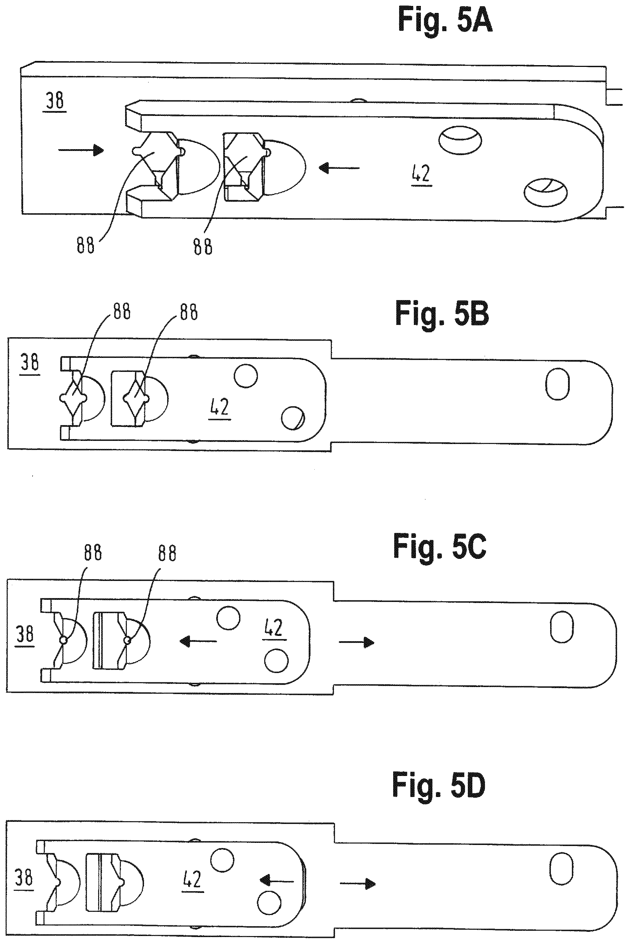

Wie es in den Figuren 5A bis 5D gezeigt ist, können durch die relative Bewegung des ersten Messers 38 bezüglich des zweiten Messers 42 verschiedene Messerpositionen ausgebildet werden. Fig. 5A und 5B zeigen eine geöffnete Messerposition. In dieser Position wird das erste Messer 38 bezüglich des zweiten Messers 42 durch die erste und zweite Antriebsvorrichtung 36, 40 so angeordnet, dass durch eine Überlagerung des ersten Ausbruchs 62 mit dem dritten Ausbruch 76 und des zweiten Ausbruchs 66 mit dem vierten Ausbruch 78 zwei Durchgangsöffnungen 88 durch die Messer 38, 42 ausgebildet werden. In der vorliegenden Ausführungsform werden durch die V-förmigen Bereiche 64b der Schneidekanten 64, 68, 80, 82 im Wesentlichen rautenförmige Durchgangsöffnungen 88 ausgebildet. Die Größe der so ausgebildeten Durchgangsöffnungen 88 kann in der offenen Position so eingestellt bzw. bemessen sein, dass die mit Isolationsmaterial ummantelten Kabelenden 16, 18 ohne Berührung der Schneidekanten 64, 68, 80, 82 durch die überlagerten Ausbrüche 62, 66, 76, 78 der Messer 38, 42 hindurchgesteckt werden können.

Fig. 5C zeigt eine Abisolier-Messerposition. In dieser Position sind die erste und zweite Schneidekante 64, 68 und die dritte und vierte Schnittkante 80, 82 so weit aufeinander zubewegt, dass die Durchgangsöffnungen 88 nur noch durch die mittleren halbkreisförmigen Bereiche 64c der Schnittkanten 64, 68, 80, 82 ausgebildet werden. Zusammenwirkende Schnittkanten 64, 68, 80, 82 bilden in dieser Position jeweils einen Kreis aus.

Fig. 5D zeigt eine geschlossene Messerposition, in der das erste Messer 38 und das zweite Messer 42 noch weiter in ihre jeweilige Schneiderichtung bewegt sind, so dass die Durchgangsöffnungen 88 nicht mehr vorhanden sind. Diese Position kann auch als Abschneideposition bezeichnet werden.

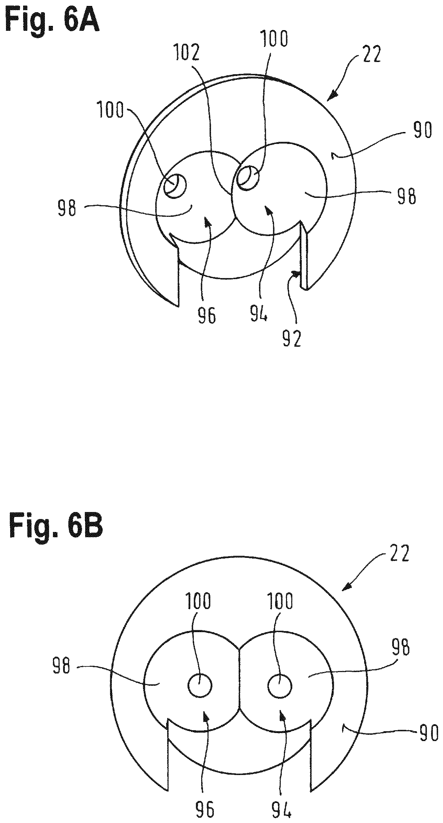

Figs. 6A und 6B zeigen dreidimensionale Ansichten der Führungsvorrichtung 22. Die Führungsvorrichtung 22 weist eine Einführseite 90 und eine Ausgangsseite 92 auf. Die Einführseite 90 und die Ausgangsseite 92 sind über einen ersten Durchlass 94 und einen zweiten Durchlass 96 miteinander verbunden. Der erste Durchlass 94 und der zweite Durchlass 96 sind jeweils trichterförmig ausgebildet und verjüngen sich ausgehend von der Einführseite 90 erst konisch in Richtung zu der Ausgangsseite 92 hin und verlaufen anschließend röhrenförmig bis zu der Ausgangsseite 90. Das heißt, der erste Durchlass 94 und der zweite Durchlass 96 weisen jeweils einen konischen Bereich 98 und einen röhrenförmigen Bereich 100 auf. Die röhrenförmigen Bereiche 100 sind konzentrisch mit den konischen Bereichen 98 ausgebildet. Der Abstand der Mittelachse durch den ersten Durchlass 94 zu der Mittelachse durch den zweiten Durchlass 96 (d.h., der Mittelabstand zwischen dem ersten Durchlass 94 und dem zweiten Durchlass 96) entspricht bevorzugt dem ersten Abstand a1 zwischen der ersten Schneidekante 64 und der zweiten Schneidekante 68. Die Radien der konischen Bereiche 98 auf der Einführseite 90 (d.h. die größten Radien der konischen Bereiche 98) sind größer als ½ x a1. Das heißt, die konischen Bereiche 98 des ersten und zweiten Durchlasses 94, 96 überlappen einander zumindest teilweise. Durch die Überlappung wird eine Trennkante 102 zwischen dem ersten Durchlass 94 und dem zweiten Durchlass 96 ausgebildet. Die Trennkante 102 liegt in einer mittig zwischen dem ersten Durchlass 94 und dem zweiten Durchlass 96 liegenden Symmetrieebene. Aufgrund der konischen Bereiche 98 ist die Trennkante gekrümmt in Richtung zu der Ausgangsseite 92 ausgebildet.

Die Führungsvorrichtung ist in der in Fig. 1 gezeigten Vorrichtung 1 so angeordnet, dass mittig durch den ersten Durchlass 94 und den zweiten Durchlass 96 verlaufende Achsen auch mittig durch die Durchgangsöffnungen 88 der Messer 38, 42 in der geöffneten Messerposition, wie sie in Fig. 5A gezeigt ist, hindurch verlaufen. Mit anderen Worten, die Führungsvorrichtung 22 ist so angeordnet und ausgebildet, dass beim Hindurchstecken zweier Kabelenden 16, 18 von der Einführseite 90 zu der Ausgangsseite 92 die 16, 18 Kabelenden durch die Durchgänge 88 der Messer 38, 42 im Wesentlichen ohne Berühren der Schneidekanten 64, 68, 80, 82 hindurch geführt werden kann. Wie es aus Fig. 2 ersichtlich ist, liegen die Durchlässe 94, 96 und die Durchgangsöffnungen 88 jeweils auf derselben Achse und in einer Ebene.

Im Weiteren wird die Funktion der Vorrichtung zum Abisolieren, wie sie in Fig. 1 und 2 gezeigt ist, beschrieben.

Die Schneidevorrichtung 30 wird zu einer Anfangsposition gefahren, in der die Basisplatte 32 zu einer Position bewegt ist, in der die Messer 38, 42 relativ nahe (bevorzugt 0,1mm bis 5 cm) zu der Führungsvorrichtung 22 angeordnet sind. Die Messer 38, 42 werden durch die zweite und dritte Antriebsvorrichtung 36, 40 in die geöffnete Messerposition gefahren, wobei die Mittelachsen der Durchgangsöffnungen 88 den Mittelachsen durch den ersten oder zweiten Durchlass 94, 96 entsprechen. Die elektrische Leitung 10 wird in negativer X-Richtung (d.h., in Fig. 1 von rechts kommend) in die Führungsvorrichtung 22 eingeführt. Bevorzugt verlaufen dabei beide Kabelenden 16, 18 in einer Horizontalebene parallel zueinander. Dies kann durch Drehen des Kabels um seine Längsachse einfach erreicht werden. Durch die Trennkante 102 wird das erste Kabelende 16 von dem zweiten Kabelende 18 getrennt und jedes Kabelende 16, 18 wird in einen der Durchlässe 94, 96 geführt. Das erste Kabelende 16 wird durch den konischen Bereich 98 in den röhrenförmigen Bereich 100 des ersten Durchlasses 94 geführt. Das zweite Kabelende 18 wird durch den konischen Bereich 98 in den röhrenförmigen Bereich 100 des zweiten Durchlasses 96 geführt. Die elektrische Leitung 10 wird weiter durch die Führungsvorrichtung 22 und die Durchgangsöffnungen 88 der Messer 38, 42 in negativer X-Richtung hindurchbewegt, bis der Sensor 44 beispielsweise detektiert, dass das erste Kabelende 16 und das zweite Kabelende 18 ausreichend weit von der Rückseite des ersten Messers 38 in negativer X-Richtung vorstehen. Der Sensor 44 gibt anschließend ein Signal an die Steuerungsvorrichtung 50 aus. Die Steuerungsvorrichtung 50 gibt anschließend ein Signal zum Schließen der Festhaltevorrichtung 20 an dieselbe aus. Die Festhaltevorrichtung 20 spannt die elektrische Leitung 10 durch schließen der nicht gezeigten Klemmbacken fest ein.

In einem nächsten Schritt werden die Messer 38, 42 mittels der zweiten und dritten Antriebsvorrichtung 36, 40 in die in Fig. 5C gezeigte Abisolier-Messerposition gefahren. Insbesondere werden sowohl das erste Messer 38 durch die zweite Antriebsvorrichtung 36 als auch das zweite Messer 42 durch die dritte Antriebsvorrichtung 40 bevorzugt symmetrisch zueinander aufeinander zu bewegt, so dass das Isolationsmaterial der Kabelenden 16, 18 gleichzeitig von beiden Seiten senkrecht zu der Kabelendenrichtung durch die V-förmigen Bereiche 64b und die mittigen halbkreisförmigen Bereiche 64c der Schneidekanten eingeschnitten wird. Genauer gesagt schneidet die erste Schneidekante 64 das Isolationsmaterial des ersten Kabelendes 16 in positiver Y-Richtung ein, während gleichzeitig die dritte Schneidekante 80 das Isolationsmaterial des ersten Kabelendes 16 in negativer Y-Richtung, d.h. entgegengesetzt einschneidet. Gleichzeitig schneiden die zweite und vierte Schneidekante 68, 82 das zweite Kabelende 18 auf dieselbe Weise ein. Aufgrund der V-förmigen Form der Schneidekanten wird das Kabelende automatisch zentriert zwischen den jeweils zwei Schneidekanten geführt. Aufgrund der gleichzeitigen Bewegung beider Messer 38, 42 bleiben die Kabelenden 16, 18 im Schneidevorgang im Wesentlichen in derselben Position. Beim Erreichen der Abisolier-Messerposition der Messer 38, 42, d.h. wenn die Durchgangsöffnung 88 zwischen der ersten/zweiten Schneidekante 64/68 und der dritten/vierten Schneidekante 80/82 so weit verkleinert wurde, dass nur noch die kreisförmige Durchgangsöffnung 88 übrig bleibt (siehe Fig. 5C), ist das Isolationsmaterial ringförmig eingeschnitten und in Längsrichtung des Kabelendes 16, 18 abgetrennt. Die in dieser Messerposition kreisförmigen Durchgangsöffnungen 88 haben bevorzugt im Wesentlichen dieselben oder einen geringfügig größeren Durchmesser als die Leiter der Kabelenden 16, 18. Somit wird das Isolationsmaterial vollständig durchschnitten, während die Leiter nicht durch die Schneidekanten 64, 68, 80, 82 verletzt werden.

In einem nächsten Schritt wird die Schneidevorrichtung 30 mittels der ersten Antriebsvorrichtung 34 zusammen mit den Messern 38, 42, die in der Abisolier-Messerposition gehalten werden, in der negativen X-Richtung, d.h. in Längsrichtung der Kabelenden 16, 18 weg von der Führungsvorrichtung 22 und der Festhaltevorrichtung 20 bewegt. Da die Drähte nicht oder nur leicht von den Schneidekanten 64, 68, 80, 82 berührt werden, wird nur das hülsenförmige abgeschnittene Isolationsmaterial von den Kabelenden 16, 18 abgezogen. Dieses fällt beim Abziehen in die Isolationsmaterialauffangwanne 46. Nach Zurückfahren der Schneidevorrichtung 30 in eine Position, bei der die Messer 38, 42 bevorzugt in negativer X-Richtung weg von der Führungsvorrichtung 22 aus dem Bereich zwischen Mehrfachcrimpamboss 48 und Mehrfachcrimpstempel 52 herausgefahren ist, ist der Abisoliervorgang beendet.

Im Weiteren wird der nachgelagerte Crimpvorgang in der teilweise in Figs. 1 und 2 gezeigten Crimpvorrichtung beschrieben. Crimpverbinder bzw. Crimphülsen werden durch kombinierte Stanz- und Umformtechnik hergestellt. Crimpverbinder können zum Transport und zur Weiterverarbeitung so hergestellt sein, dass sie an ihren Enden an parallel verlaufenden Trägerbändern, die vorzugsweise aus dem gleichen Material wie die Crimpverbinder ausgebildet sind, gehalten werden. In diesem Verbund sind daher benachbarte Crimpverbinder in einem vorbestimmten Mittelachsenbstand (Abstand der Mittelachsen der Crimpverbinder) zueinander gehalten. Mittels einer nicht gezeigten Crimpverbinderzuführvorrichtung werden die in den Trägerbändern gehaltenen Crimpverbinder zugeführt und in den Mehrfachcrimpamboss 48 eingelegt. Die Crimpverbinderzuführvorrichtung sorgt dafür, dass die mit Crimpverbindern bestückten Trägerbändern so bewegt werden, dass die Crimpverbinder automatisch, ohne sie von den Trägerbändern zu lösen, auf dem Mehrfachcrimpamboss 48 abgelegt werden können. Der vorbestimmte Mittelabstand der Crimpverbinder (d.h. der Abstand ihrer Mittelachsen) entspricht dem ersten Abstand a1. Das heißt, es ist entweder der Abstand der Crimpverbinder so gewählt, dass er dem Abstand a1 entspricht, oder umgekehrt. Im nächsten Schritt wird der Mehrfachcrimpstempel 52 von oben auf den Mehrfachcrimpamboss 48 abgesenkt, wodurch die Crimpverbinder auf die abisolierten Kabelenden 16, 18 gecrimpt werden. Beim Crimpvorgang werden die Crimpverbinder gleichzeitig von den Trägerbändern gelöst. In einem letzten Schritt werden der Mehrfachcrimpstempel 52, der Mehrfachcrimpamboss 48, und die Schneidevorrichtung 30 in Ihre Ausgangspositionen gefahren und die Festhaltevorrichtung 20 gelöst. Anschließend kann das abisolierte und gecrimpte Kabel entnommen werden. Mit der vorliegenden Vorrichtung kann der Verbund aus Trägerbändern und Crimpverbindern zum maschinellen Zuführen und Verarbeiten der Crimpverbinder genutzt werden. Insbesondere wird durch Zuführen der Crimpverbinder ohne Heraustrennen aus den Trägerbändern ein erneutes Ausrichten der Crimpverbinder überflüssig.

Mittels der Führungsvorrichtung ist es möglich, zwei parallel nebeneinander verlaufende Kabelenden in einem vorbestimmten Abstand zueinander anzuordnen und zu halten. Durch das Ausbilden von zwei Schneidekanten in jedem Messer in einem vorbestimmten Abstand zueinander und das gegenläufige Anordnen der Schneidekanten jedes Messers ist es möglich, gleichzeitig an zwei Schneidepositionen, die in dem vorbestimmten Abstand zueinander angeordnet sind, in zwei verschiedene Kabelenden zu schneiden. Somit kann das Isolationsmaterial von zwei Kabelenden gleichzeitig durchtrennt und abgezogen werden. Aufgrund der gegenläufigen gleichzeitigen Bewegung beider Messer ist es möglich, das Isolationsmaterial abzutrennen, ohne die Position der Kabelenden während des Schneidens wesentlich zu verändern. Dies wird weiter durch die V-förmige Ausbildung der Schneidekanten und dem halbrunden zentralen Bereich der Schneidekanten unterstützt. Dadurch, dass sowohl die Mittelabstände der Crimpverbinder auf den Trägerbändern als auch die Mittelabstände der Durchlässe durch die Führungsvorrichtung als auch die Mittelabstände der Durchgänge durch die Messer in dem gleichen Abstand zueinander angeordnet sind, kann der Gesamtprozess beschleunigt werden. Hierdurch ist es möglich, die Crimpverbinder direkt ohne entsprechende Ausrichtung und Neuanordnung von den Trägerbändern ohne Zwischenschritt mit den abisolierten Kabelenden zu vercrimpen. Auch die Kabelenden müssen zwischen dem Abisoliervorgang und dem Crimpvorgang nicht in einem Zwischenschritt neu ausgerichtet werden. Vielmehr erfolgt dies automatisch beim Einführen der zwei Kabelenden.

In einer weiteren Ausführungsform werden nach dem Erreichen der Abisolier-Messerposition, wie sie in Fig. 5C gezeigt ist, die Messer minimal in der zu der Schneiderichtung entgegengesetzten Richtung bewegt. Das heißt, die Messer 38, 42 werden wieder leicht geöffnet (gelüftet). Dadurch wird erreicht, dass beim Abziehen des Isolationsmaterials, das heißt beim Bewegen der Schneidevorrichtung 30 weg von den Kabelenden 16, 18, der Leiter der Kabelenden 16, 18 weniger durch die Schneidekanten verletzt werden kann.

In einer weiteren Ausführungsform, die mit einer der oben genannten Ausführungsform kombiniert werden kann, wird die Schneidevorrichtung 30 nach dem Einschneiden des Isoliermaterials zum Abisolieren in einem ersten Schritt um einen vorbestimmten Abstand weg von der Führungsvorrichtung 22 bewegt. Dieser vorbestimmte Abstand entspricht der gewünschten Länge des abisolierten Bereichs der Kabelenden. Anschließend werden die Messer in die in Fig. 5D gezeigte vollständig geschlossene Position gefahren, wodurch auch die Drähte der Kabelenden 16, 18 vollständig durchtrennt werden. Hierdurch können abisolierte Kabelenden mit definierten Längen hergestellt werden. Alternativ können die Kabelenden 16, 18 auch vor dem Abisolieren auf eine vorbestimmte Länge abgeschnitten werden. In diesem Fall erfolgt eine entsprechende Bewegung der Schneidevorrichtung 30 in Richtung weg von der Führungsvorrichtung 22 nach Einführen der Kabelenden. Anschließend werden die Kabelenden zuerst abgeschnitten, bevor der oben beschriebene Abisoliervorgang durch Öffnen der Messer und Zurückbewegen der Schneidevorrichtung 30 startet.

Des Weiteren kann die Vorrichtung auch derart weitergebildet werden, dass mehr als zwei nebeneinander angeordnete Kabelenden abisoliert und gecrimpt werden können. Alternativ oder zusätzlich können auch mehrere über- und nebeneinander angeordnete Kabelenden abisoliert werden. In einer weiteren Ausführungsform kann die Schneidevorrichtung 30 auch starr montiert sein, so dass keine Bewegung in Richtung und weg von der Führungsvorrichtung möglich ist. In diesem Fall erfolgt das Abziehen des Isolationsmaterials durch Herausziehen der elektrische Leitung aus der Führungsvorrichtung. D.h. es werden alle Kabelenden gemeinsam parallel in dieselbe Richtung bewegt.

Die Messer und die entsprechenden Antriebsvorrichtungen können auch auf mehreren Basisplatten, die unabhängig voneinander ausgebildet und verfahrbar sind, angeordnet sein. Beispielsweise kann eines der Messer auf der bezüglich einer durch die Führungsvorrichtung verlaufenden Symmetrieebene gegenüber dem anderen Messer bzw. gegenüber der anderen Antriebsvorrichtung angeordnet sein. In diesem Fall können bevorzugt Messer zum Einsatz kommen, die identisch ausgebildet sind, wobei die Schneidkanten sich jeweils aufgrund der gegenüberliegenden Anordnung gegenüberliegen. Die Basisplatte kann auch C-förmig um die Führungsvorrichtung angeordnet sein.

Der erste Abstand a1 ist bevorzugt zwischen 1 mm und 15 mm, noch bevorzugter zwischen 2 und 10 mm, noch bevorzugter zwischen 3 und 9 mm, und noch bevorzugter zwischen 4 und 7 mm, wie beispielsweise 4 mm, 5 mm oder 6,75 mm.

Die erste Dicke d1 ist bevorzugt zwischen 0,1 mm und 5 mm, noch bevorzugter zwischen 0,5 und 2 mm, und noch bevorzugter zwischen 0,9 mm und 1,3 mm, wie beispielsweise 0,9 mm, 1 mm oder 1,2 mm.

Die zweite Dicke d2 ist bevorzugt zwischen 0,1 mm und 5 mm, noch bevorzugter zwischen 0,5 mm und 2 mm, und noch bevorzugter zwischen 0,9 und 1,3 mm, wie beispielsweise 0,9 mm, 1 mm oder 1,2 mm.

Die erste Länge 11 ist bevorzugt zwischen 30 mm und 200 mm, noch bevorzugter zwischen 40 mm und 100 mm und noch bevorzugter zwischen 50 mm und 70 mm, wie beispielsweise 60 mm, 63 mm und 64,3 mm.

Die zweite Länge 12 ist bevorzugt zwischen 5 mm und 20 mm, noch bevorzugter zwischen 7 mm und 12 mm wie beispielsweise 9 mm, 10 mm oder 11 mm.

Die dritte Länge 13 ist bevorzugt zwischen 0,2 mm und 5 mm, noch bevorzugter zwischen 0,5 mm und 3 mm und noch bevorzugter zwischen 0,6 mm und 2,6 mm, wie zum Beispiel 0,6 mm, 1,4 mm und 2,6 mm.

Die vierte Länge 14 ist bevorzugt zwischen 0,1 mm und 3 mm, noch bevorzugter zwischen 0,5 mm und 2 mm und noch bevorzugter zwischen 0,8 mm und 1,2 mm, wie beispielsweise 0,9 mm, 1 mm und 1,1 mm.

Die fünfte Länge 15 ist bevorzugt zwischen 15 mm und 150 mm, noch bevorzugter zwischen 20 und 70 mm und noch bevorzugter zwischen 25 mm und 40 mm, wie beispielsweise 28 mm, 30 mm und 32 mm.

Die erste Breite b1 ist bevorzugt zwischen 5 mm und 25 mm, noch bevorzugter zwischen 8 mm und 20 mm, und noch bevorzugter zwischen 10mm und 15 mm, wie zum Beispiel 10 mm, 11 mm oder 12 mm.

Die zweite Breite b2 ist bevorzugt zwischen 5 mm und 25 mm, noch bevorzugter zwischen 7 mm und 20 mm und noch bevorzugter zwischen 8 mm und 15 mm, wie beispielsweise 8 mm, 9 mm oder 10 mm.

Die dritte Breite b3 ist bevorzugt zwischen 2 mm und 15 mm, noch bevorzugter zwischen 3 mm und 9 mm und noch bevorzugter zwischen 5 und 8 mm, wie beispielsweise 7 mm oder 8 mm.

Die vierte Breite b4 ist bevorzugt zwischen 2 mm und 15 mm, noch bevorzugter zwischen 3 mm und 9 mm und noch bevorzugter zwischen 5 mm und 8 mm, wie beispielsweise 6 mm oder 7 mm.

Die fünfte Breite b5 ist bevorzugt zwischen 5 mm und 25 mm, noch bevorzugter zwischen 8 mm und 20 mm, und noch bevorzugter zwischen 10 mm und 15 mm, wie zum Beispiel 10, 11 oder 12 mm.

Der Winkel α ist bevorzugt zwischen 80 und 150°, noch bevorzugter zwischen 90 und 140° und noch bevorzugter zwischen 100 und 135°, wie zum Beispiel 125°, 130° und 135°.

Der Radius R1 der halbkreisförmigen Schneidekante ist bevorzugt zwischen 0,1 mm und 2 mm, noch bevorzugter zwischen 0,2 mm und 1,2 mm und noch bevorzugter zwischen 0,3 mm und 0,8 mm, wie zum Beispiel 0,45 mm, 0,55 mm, 0,66 mm oder 0,8 mm.

Das Material für die Messer ist bevorzugt 1.3344 HSS und bevorzugt gehärtet und angelassen (62 + 3 HRC) und TiN beschichtet.

Im Folgenden werden weitere Aspekte der vorliegenden Offenbarung angegeben:
Gemäß einem ersten Aspekt ist die Vorrichtung zum gleichzeitigen Abisolieren von mindestens einem ersten von Isolationsmaterial umgebenen Kabelende 16 und einem zweiten von Isolationsmaterial umgebenen Kabelende 18 mit
   einer Schneidevorrichtung 30 mit einem ersten Messer 38 und einem zweiten Messer 42, die relativ zueinander in einer ersten Richtung Y bewegbar sind und deren Schneidekanten 64, 68, 80, 82 im Wesentlichen in derselben Ebene angeordnet sind,
   bei der
   die Schneidevorrichtung 30 dazu angepasst ist, die Schneidekanten 64, 68, 80, 82 beider Messer 38, 42 so aufeinander zu zu bewegen, dass durch die Schneidekanten 64, 68, 80, 82 gleichzeitig das Isolationsmaterial der mindestens zwei Kabelenden 16, 18 eingeschnitten wird, dadurch gekennzeichnet, dass
   das erste Messer 38 mindestens eine erste Schneidekante 64 und eine zweite Schneidekante 68 aufweist, die beide in der ersten Richtung (Y) senkrecht zu der Richtung der Kabelenden 16, 18 schneiden und einen ersten Abstand a1 zueinander in der ersten Richtung Y aufweisen,
      das zweite Messer 42 mindestens eine dritte Schneidekante 80 und eine vierte Schneidekante 82 aufweist, die beide in eine zweite, zu der ersten Richtung (Y) entgegengesetzten Richtung schneiden und den ersten Abstand a1 zueinander in der ersten Richtung Y aufweisen, und
   die Schneidevorrichtung 30 zum gleichzeitigen Abziehen des Isolationsmaterials von den mindestens zwei Kabelenden 16, 18 zum Abisolieren der mindestens zwei Kabelenden 16, 18 bewegbar ist.

Mit anderen Worten: die mindestens zwei bevorzugt parallel in derselben Richtung verlaufenden Kabelenden 16, 18 sind bevorzugt parallel in einer Ebene (hier X-Y-Ebene) angeordnet und die zwei Messer 38, 42 bewegen sich zum Abisolieren der Kabelenden entgegengesetzt zueinander in bzw. parallel zu dieser Ebene.

In weiteren Ausführungsformen kann jedes Messer auch mehr als zwei, beispielsweise drei, vier oder fünf Schneidekanten aufweisen, die jeweils in einem vorbestimmten Abstand zueinander angeordnet sind und in derselben ersten oder dieser entgegengesetzten Richtung gegen die entsprechenden Schneidekanten in dem zweiten Messer schneiden, so dass beispielsweise drei, vier oder fünf Kabelenden gleichzeitig abisoliert werden können.

Gemäß einem weiteren Aspekt wird ein Verfahren zum gleichzeitigen Abisolieren mindestens zweier von Isolationsmaterial umgebenen Kabelenden 16, 18, mit den folgenden Schritten angegeben:
Einführen von mindestens zwei parallel in einer ersten Ebene verlaufenden Kabelenden 16, 18 in derselben Richtung in die entsprechende Anzahl von Durchgangsöffnungen 88, die jeweils durch ein erstes Messer 38 und ein zweites Messer 42 verlaufen und von denen jede durch eine Schneidekante eines ersten Messers 38 und eine Schneidekante eines zweiten Messer 42 begrenzt wird, einer Schneidevorrichtung 20,gleichzeitiges Einschneiden in Isolationsmaterial der Kabelenden 16, 18 durch die Schneidekanten durch Bewegen des ersten Messers 38 relativ zu dem zweiten Messer 42, in einer ersten Richtung Y, die senkrecht zu der Längsrichtung der Kabelenden 16, 18 und parallel zu oder in der ersten Ebene verläuft, so dass die Durchgangsöffnungen 88 verkleinert werden,
gleichzeitiges Abziehen des Isolationsmaterials von den Kabelenden 16, 18 durch integrales Bewegen der Messer 38, 42 bezüglich der Kabelenden 16, 18 in Längsrichtung der Kabelenden 16, 18 oder durch integrales Bewegen der Kabelenden 16, 18 bezüglich der Schneidevorrichtung 30 in Längsrichtung der Kabelenden 16, 18.

Die einzelnen durch die Messer begrenzten Durchgangsöffnungen sind bevorzugt jeweils vollständig von den Messern 38, 42 umgeben.

Es wird explizit betont, dass alle in der Beschreibung und/oder den Ansprüchen offenbarten Merkmale als getrennt und unabhängig voneinander zum Zweck der ursprünglichen Offenbarung ebenso wie zum Zweck des Einschränkens der beanspruchten Erfindung unabhängig von den Merkmalskombinationen in den Ausführungsformen und/oder den Ansprüchen angesehen werden sollen. Es wird explizit festgehalten, dass alle Bereichsangaben oder Angaben von Gruppen von Einheiten jeden möglichen Zwischenwert oder Untergruppe von Einheiten zum Zweck der ursprünglichen Offenbarung ebenso wie zum Zweck des Einschränkens der beanspruchten Erfindung offenbaren, insbesondere auch als Grenze einer Bereichsangabe.

### Bezugszeichenliste

- 10:: elektrische Leitung
- 12:: erstes Isolierkabel
- 14:: zweites Isolierkabel
- 16:: erstes Kabelende
- 18:: zweites Kabelende
- 20:: Festhaltevorrichtung
- 22:: Führungsvorrichtung
- 30:: Schneidevorrichtung
- 32:: Basisplatte
- 34:: erste Antriebsvorrichtung
- 36:: zweite Antriebsvorrichtung
- 38:: erstes Messer
- 40:: dritte Antriebsvorrichtung
- 42:: zweites Messer
- 44:: Sensor
- 46:: Isolationsmaterialauffangwanne
- 48:: Mehrfachcrimpamboss
- 50:: Steuerungsvorrichtung
- 52:: Mehrfachcrimpstempel
- 54:: Vorderfläche
- 56:: Rückfläche
- 58:: Führungsbereich
- 60:: Schneidebereich
- 62:: erster Ausbruch
- 64:: erste Schneidekante
- 64a:: Schneidekantenrandbereich
- 64b:: V-förmiger Schneidekantenbereich
- 64c:: halbkreisförmiger Schneidkantenbereich
- 66:: zweiter Ausbruch
- 68:: zweite Schneidekante
- 70:: dritter Ausbruch
- 72:: Führungsbereich
- 74:: Schneidebereich
- 76:: dritter Ausbruch
- 78:: vierter Ausbruch
- 80:: dritte Schneidekante
- 82:: vierte Schneidekante
- 84:: Rückfläche
- 86:: Vorderfläche
- 88:: Durchgangsöffnung
- 90:: Einführseite
- 92:: Ausgangsseite
- 94:: erster Durchlass
- 96:: zweiter Durchlass
- 98:: konischer Bereich
- 100:: röhrenförmiger Bereich
- 102:: Trennkante

## Patentansprüche

1. Vorrichtung zum gleichzeitigen Abisolieren von mindestens einem ersten von Isolationsmaterial umgebenen Kabelende (16) und einem zweiten von Isolationsmaterial umgebenen Kabelende (18), mit
einer Schneidevorrichtung (30) mit einem ersten Messer (38) und einem zweiten Messer (42), die relativ zueinander in einer ersten Richtung (Y) bewegbar sind und deren Schneidekanten (64, 68, 80, 82) im Wesentlichen in derselben Ebene angeordnet sind,
bei der
die Schneidevorrichtung (30) dazu angepasst ist, die Schneidekanten (64, 68, 80, 82) beider Messer (38, 42) so aufeinander zu zu bewegen, dass durch die Schneidekanten (64, 68, 80, 82) gleichzeitig das Isolationsmaterial der mindestens zwei Kabelenden (16, 18) eingeschnitten wird, und
die Schneidevorrichtung (30) zum gleichzeitigen Abziehen des Isolationsmaterials von den mindestens zwei Kabelenden (16, 18) zum Abisolieren der mindestens zwei Kabelenden (16, 18) bewegbar ist,
**dadurch gekennzeichnet, dass**
das erste Messer (38) mindestens eine erste Schneidekante (64) und eine zweite Schneidekante (68) aufweist, die beide in der ersten Richtung (Y) senkrecht zu der Richtung der Kabelenden (16, 18) schneiden und einen Abstand (a1) zueinander in der ersten Richtung (Y) aufweisen,
das zweite Messer (42) mindestens eine dritte Schneidekante (80) und eine vierte Schneidekante (82) aufweist, die beide in eine zweite, zu der ersten Richtung (Y) entgegengesetzten Richtung schneiden und den ersten Abstand (a1) zueinander in der ersten Richtung (Y) aufweisen, und
das erste Messer (38) und das zweite Messer (42) so ausgebildet und zueinander angeordnet sind, dass die erste Schneidekante (64) und die dritten Schneidekante (80) zum Einschneiden in das erstes Kabelende (16) und die zweite Schneidekante (68) und die vierte Schneidekante (82) zum Einschneiden in das zweite Kabelende (18) ausgebildet sind, und alle vier Schneidekanten (64, 68, 80, 82) im Wesentlichen gleichzeitig schneiden.

2. Vorrichtung nach Patentanspruch 1, die weiter aufweist
eine Führungsvorrichtung (20), die zum Führen der Kabelenden (16, 18) beim Einführen der Kabelenden (16, 18) in die Vorrichtung zum Abisolieren angepasst ist,
bei der
die Führungsvorrichtung (20) so ausgebildet ist, dass die Kabelenden (16, 18) durch die Führungsvorrichtung (20) nach dem Einführen so angeordnet sind, dass sie beim Einschneiden durch die Messer (38, 42) im Wesentlichen nicht bewegt werden.

3. Vorrichtung nach Patentanspruch 2, bei der
zwischen der ersten Schneidekante (64) und der dritten Schneidekante (80) und der zweiten Schneidekante (66) und der vierten Schneidekante (82) in einem geöffneten Zustand der Schneidevorrichtung (30) jeweils eine Durchgangsöffnung (88) zum Durchführen der Kabelenden (16, 18) durch die Messer (38, 42) ausgebildet wird, und
die Führungsvorrichtung (20) dazu angepasst ist, jedes Kabelende (16, 18) in eine Durchgangsöffnungen (88) zu führen.

4. Vorrichtung nach Patentanspruch 2 oder 3, bei der
die Führungsvorrichtung (20) mindestens zwei parallel angeordnete, trichterförmige Durchlässe (94, 96) mit jeweils einem konischen Bereich (98) und einem röhrenförmigen Bereich (100) aufweist, bei der
der konische Bereich (98) ausgehend von einer Einführseite (90) des Durchlasses (94) verjüngend ausgebildet ist und in den röhrenförmigen Bereich (100) übergeht, der auf einer Ausgangsseite (92) des Durchlasses (94) endet, und
der konische Bereich (98) des ersten Durchlasses (94) zumindest teilweise mit dem konischen Bereich (98) des zweiten Durchlasses (96), gesehen in Richtung der Durchlässe (94, 96) überlappt.

5. Vorrichtung nach einem der Patentansprüche 1 bis 4, bei der
das erste Messer (38) und das zweite Messer (42) weiter so ausgebildet und zueinander angeordnet sind, dass die erste Schneidekante (64) und die dritten Schneidekante (80) zum vollständigen Durchtrennen des ersten Kabelendes (16) und die zweite Schneidekante (68) und die vierte Schneidekante (82) zum vollständigen Durchtrennen des zweiten Kabelendes (18) ausgebildet sind.

6. Vorrichtung zum Abisolieren und Crimpen mindestens zweier von Isolationsmaterial umgebenen Kabelenden, mit
einer Vorrichtung zum Abisolieren nach einem der vorherigen Patentansprüche, und
einer Crimpvorrichtung mit
einer Crimpverbinderzuführvorrichtung zum Zuführen von Crimpverbindern, die in einem vorbestimmten Mittelabstand zueinander an Trägerbändern gehalten werden,
einem Mehrfachcrimpstempel (52) und einem Mehrfachcrimpamboss (48), die dazu angepasst sind, jeweils mindestens zwei Crimpverbinder mit der entsprechenden Anzahl abisolierter Kabelenden (16, 18) zu verbinden,
bei der
der Mittelabstand der mindestens zwei durch die Führungsvorrichtung (20) geführten benachbarten Kabelenden (16, 18) und/oder ein erster vorbestimmter Abstand (a1) der ersten und zweiten Schneidekante (64, 68) und der dritten und vierten Schneidkante (64, 68) im Wesentlichen dem vorbestimmten Mittelabstand der an den Trägerbändern gehaltenen Crimpverbindern entspricht.

7. Verfahren zum gleichzeitigen Abisolieren mindestens zweier von Isolationsmaterial umgebenen Kabelenden (16, 18), mit den folgenden Schritten:
Einführen von mindestens zwei parallel in einer ersten Ebene verlaufenden Kabelenden (16, 18) in derselben Richtung in die entsprechende Anzahl von Durchgangsöffnungen (88), die jeweils durch ein erstes Messer (38) und ein zweites Messer (42) verlaufen und von denen jede durch eine Schneidekante eines ersten Messers (38) und eine Schneidekante eines zweiten Messer (42) begrenzt wird, einer Schneidevorrichtung (30),
gleichzeitiges Einschneiden in Isolationsmaterial der Kabelenden (16, 18) durch die Schneidekanten durch Bewegen des ersten Messers (38) relativ zu dem zweiten Messer (42) in einer ersten Richtung (Y), die senkrecht zu der Längsrichtung der Kabelenden (16, 18) und parallel zu oder in der ersten Ebene verläuft, so dass die Durchgangsöffnungen (88) verkleinert werden,
gleichzeitiges Abziehen des Isolationsmaterials von den Kabelenden (16, 18) durch integrales Bewegen der Messer (38, 42) bezüglich der Kabelenden (16, 18) in Längsrichtung der Kabelenden (16, 18) oder durch integrales Bewegen der Kabelenden (16, 18) bezüglich der Schneidevorrichtung (30) in Längsrichtung der Kabelenden (16, 18).

8. Verfahren nach Patentanspruch 7, bei dem
das Isolationsmaterial gleichzeitig nur durch Bewegen der Messer (38, 42) abgezogen wird, mit folgenden weiteren Schritten:
Festhalten der Kabelenden (16, 18) nach dem Einführen, und/oder
Vollständiges Durchtrennen der Kabelenden (16, 18) nach oder vor dem Abisolieren, und/oder
nach dem Einschneiden in das Isolationsmaterial, Bewegen des ersten Messers (38) relativ zu dem zweiten Messer (42) in einer Richtung entgegengesetzt der Richtung zum Einschneiden in das Isolationsmaterial zum Öffnen der Messer (38, 42) derart, dass das Isolationsmaterial ohne Beschädigung von den Leitern der Kabelenden mit den Messern (38, 42) abziehbar ist.

9. Verfahren zum Abisolieren und Crimpen zweier von Isolationsmaterial umgebenen Kabelenden (16, 18), mit den folgenden Schritten
Abisolieren und/oder Abschneiden der Kabelenden (16, 18) gemäß dem Verfahren nach einem der Patentansprüche 8 oder 9,
Einlegen von einer der Anzahl an Kabelenden (16, 18) entsprechenden Anzahl an mindestens einem Trägerband in einem vorbestimmten relativen Abstand zueinander gehaltenen Crimpverbindern auf einen Mehrfachcrimpamboss ohne Verändern des relativen Abstands der Crimpverbinder,
Einlegen der abisolierten Kabelenden (16, 18) in die Crimpverbinder ohne die Relativposition der Kabelenden (16, 18) zueinander zu verändern,
Crimpen der Crimpverbinder auf die Kabelenden (16, 18).

## Claims

1. A device for simultaneous stripping at least a first cable end (16) surrounded by insulation material and a second cable end (18) surrounded by insulation material, the device comprising:
a cutting device (30) including a first cutter (38) and a second cutter (42) that are movable relative to each other in a first direction (Y) and each having cutting edges (64, 68, 80, 82) that are disposed substantially in the same plane,
wherein
the cutting device (30) is configured to move the cutting edges (64, 68, 80, 82) of both cutters (38, 42) towards each other such that the insulation material of the at least two cable ends (16, 18) is simultaneously cut by the cutting edges (64, 68, 80, 82), and
the cutting device (30) is movable to simultaneously pull-off the insulation material from the at least two cable ends (16, 18) in order to strip the at least two cable ends (16, 18),
**characterized in that**
the first cutter (38) has a first cutting edge (64) and a second cutting edge (68), which both cut in the first direction (Y) perpendicular to the direction of the cable ends (16, 18) and have a distance (a1) to each other in the first direction (Y),
the second cutter (42) has a third cutting edge (80) and a fourth cutting edge (82), which both cut in a second direction opposite to the first direction (Y) and have a distance (a1) to each other in the first direction (Y), and
the first cutter (38) and the second cutter (42) are formed and are disposed with respect to each other, such that the first cutting edge (64) and the third cutting edge (80) are configured to cut into the first cable end (16), and the second cutting edge (68) and the fourth cutting edge (82) are configured to cut into the second cable end (18), and all four cutting edges (64, 68, 80, 82) cut substantially simultaneously.

2. The device according to claim 1, further comprising
a guide device (20) configured to guide the cable ends (16, 18) during insertion of the cable ends (16, 18) into the device for stripping,
wherein
the guide device (20) is configured such that, after being inserted therein, the cable ends (16, 18) are disposed by the guide device (20) such that they do not substantially move, while being cut by the cutters (38, 42).

3. The device according to claim 2, wherein
in an open state of the cutting device (30), a through-opening (88) for respectively guiding the cable ends (16, 18) through the cutters (38, 42) is respectively formed between the first cutting edge (64) and the third cutting edge (80) and between the second cutting edge (66) and the fourth cutting edge (82), and
the guide device (20) is configured to guide each of the cable ends (16, 18) into one of the through-openings (88).

4. The device according to claim 2 or 3, wherein
the guide device (20) includes at least two funnel-shaped passages (94, 96) disposed in parallel, each having a conical region (98) and a tubular region (100), wherein
starting from an insertion side (90) of each funnel-shaped passage (94), the conical region (98) tapers and transitions into the tubular region (100), which ends at an output side (92) of the funnel-shaped passage (94), and
as viewed in a direction of the passages (94, 96), the conical region (98) of the first passage (94) at least partially overlaps with the conical region (98) of the second passage (96).

5. The device according to any one of claims 1 to 4, wherein
the first cutter (38) and the second cutter (42) are further formed and are disposed with respect to each other, such that the first cutting edge (64) and the third cutting edge (80) are configured to completely sever the first cable end (16), and the second cutting edge (68) and the fourth cutting edge (82) are configured to completely sever the second cable end (18).

6. A device for stripping and crimping at least two cable ends surrounded by insulation material, comprising:
the device for stripping according to any one of the preceding claims, and
a crimping device including
a crimp connector supplying device for supplying crimp connectors, which are held at carrier strips at a predetermined center distance to one another,
a multiple crimp punch (52) and a multiple crimp anvil (48) configured to respectively connect at least two crimp connectors to the respective number of stripped cable ends (16, 18),
wherein
the center distance of the at least two adjacent cable ends (16, 18) guided by the guide device (20) and/or a first predetermined center distance (a1) of the first and second cutting edges (64, 68) and the third and fourth cutting edges (68, 82) at least substantially corresponds to the predetermined center distance of the crimp connectors held at the carrier strips.

7. A method for simultaneously stripping at least two cable ends (16, 18) surrounded by insulation material, the method comprising the following steps:
inserting at least two cable ends (16, 18) running in parallel in a first plane in the same direction into the corresponding number of through-openings (88) that respectively extend through a first cutter (38) and a second cutter (42) and each of which is bordered by a cutting edge of a first cutter (38) and a cutting edge of a second cutter (42) of a cutting device (30),
simultaneously cutting into the insulation material of the cable ends (16, 18) by the cutting edges by moving the first cutter (38) relative to the second cutter (42) in a first direction (Y) which runs perpendicular to the longitudinal direction of the cable ends (16, 18) and parallel to or in the first plane to reduce the through-openings (88), and
simultaneously pulling-off the insulation material from the cable ends (16, 18) by integrally moving the cutters (38, 42) relative to the cable ends (16, 18) in the longitudinal direction of the cable ends (16, 18) or by integrally moving the cable ends (16, 18) relative to the cutting device (30) in the longitudinal direction of the cable ends (16, 18).

8. The method according to claim 7, wherein
the insulation material is simultaneously pulled off by moving only the cutters (38, 42), the method further comprising the following steps:
fixing the cable ends (16, 18) in position after insertion, and/or
completely severing the cable ends (16, 18) after or before the stripping, and/or
after the cutting into the insulation material, moving the first cutter (38) relative to the second cutter (42) in a direction opposite to the direction for cutting into the insulation material to open the cutters (38, 42) in such a manner that the insulation material can be pulled off the conductors of the cable ends by the cutters (38, 42) without damage.

9. Method for stripping and crimping two cable ends (16, 18) surrounded by insulation material, the method comprising the following steps:
stripping and/or cutting the cable ends (16, 18) according to the method according to any one of claims 8 or 9,
loading a number of crimp connectors, which corresponds to the number of cable ends (16, 18) and which is held at a predetermined relative distance to one another on at least one carrier strip, onto a multiple crimp anvil without changing the predetermined distance of the crimp connectors,
loading the stripped cable ends (16, 18) into the crimp connectors without changing the relative position of the cable ends (16, 18) with respect to one another,
crimping the crimp connectors onto the cable ends (16, 18).

## Revendications

1. Dispositif de dénudage simultané d'au moins une première extrémité de câble (16) entourée de matériau isolant et une deuxième extrémité de câble (18) entourée de matériau isolant, avec
un dispositif de coupe (30) avec un premier couteau (38) et un deuxième couteau (42), qui sont mobiles l'un par rapport à l'autre dans une première direction (Y) et dont les arêtes de coupe (64, 68, 80, 82) sont agencées sensiblement dans le même plan,
dans lequel
le dispositif de coupe (30) est adapté pour rapprocher l'une de l'autre les arêtes de coupe (64, 68, 80, 82) des deux couteaux (38, 42) de telle sorte que le matériau isolant des au moins deux extrémités de câble (16, 18) est entaillé en même temps par les arêtes de coupe (64, 68, 80, 82), et
le dispositif de coupe (30) est mobile pour le retrait simultané du matériau isolant des au moins deux extrémités de câble (16, 18) pour le dénudage des au moins deux extrémités de câble (16, 18),
**caractérisé en ce que**
le premier couteau (38) présente au moins une première arête de coupe (64) et une deuxième arête de coupe (68), qui coupent toutes deux dans la première direction (Y) perpendiculaire à la direction des extrémités de câble (16, 18) et présentent une distance (a1) l'une par rapport à l'autre dans la première direction (Y),
le deuxième couteau (42) présente au moins une troisième arête de coupe (80) et une quatrième arête de coupe (82), qui coupent toutes deux dans une deuxième direction opposée à la première direction (Y) et présentent la première distance (a1) l'une par rapport à l'autre dans la première direction (Y), et
le premier couteau (38) et le deuxième couteau (42) sont réalisés et agencés l'un par rapport à l'autre de telle sorte que la première arête de coupe (64) et la troisième arête de coupe (80) sont réalisées pour entailler la première extrémité de câble (16) et la deuxième arête de coupe (68) et la quatrième arête de coupe (82) sont réalisées pour entailler la deuxième extrémité de câble (18), et les quatre arêtes de coupe (64, 68, 80, 82) coupent sensiblement en même temps.

2. Dispositif selon la revendication 1, qui présente en outre un dispositif de guidage (20), qui est adapté pour le guidage des extrémités de câble (16, 18) lors de l'introduction des extrémités de câble (16, 18) dans le dispositif de dénudage,
dans lequel
le dispositif de guidage (20) est réalisé de telle sorte que les extrémités de câble (16, 18) sont agencées à travers le dispositif de guidage (20) après l'introduction de telle sorte qu'elles ne sont sensiblement pas déplacées lors de l'entaille par les couteaux (38, 42).

3. Dispositif selon la revendication 2, dans lequel
entre la première arête de coupe (64) et la troisième arête de coupe (80) et la deuxième arête de coupe (66) et la quatrième arête de coupe (82) dans un état ouvert du dispositif de coupe (30) respectivement une ouverture de passage (88) est réalisée pour la traversée des extrémités de câble (16, 18) par les couteaux (38, 42), et
le dispositif de guidage (20) est adapté pour guider chaque extrémité de câble (16, 18) dans une ouverture de passage (88).

4. Dispositif selon la revendication 2 ou 3, dans lequel
le dispositif de guidage (20) présente au moins deux passages (94, 96) en forme d'entonnoir agencés en parallèle avec respectivement une zone conique (98) et une zone tubulaire (100), dans lequel
la zone conique (98) partant d'un côté introduction (90) du passage (94) est réalisée en se rétrécissant et se transforme en la zone tubulaire (100), qui se termine sur le côté sortie (92) du passage (94), et
la zone conique (98) du premier passage (94) chevauche au moins en partie la zone conique (98) du deuxième passage (96), vu dans la direction des passages (94, 96).

5. Dispositif selon l'une quelconque des revendications 1 à 4, dans lequel
le premier couteau (38) et le deuxième couteau (42) sont réalisés et agencés en outre l'un par rapport à l'autre de telle sorte que la première arête de coupe (64) et la troisième arête de coupe (80) sont réalisées pour le sectionnement complet de la première extrémité de câble (16) et la deuxième arête de coupe (68) et la quatrième arête de coupe (82) sont réalisées pour le sectionnement complet de la deuxième extrémité de câble (18).

6. Dispositif de dénudage et de sertissage d'au moins deux extrémités de câble entourées de matériau isolant, avec
un dispositif de dénudage selon l'une quelconque des revendications précédentes, et
un dispositif de sertissage avec
un dispositif d'amenée de connecteur de sertissage pour l'amenée de connecteurs de sertissage, qui sont maintenus sur des bandes de support l'un par rapport à l'autre à un entraxe prédéterminé,
un mors de sertissage multiple (52) et un berceau de sertissage multiple (48), qui sont adaptés pour relier respectivement au moins deux connecteurs de sertissage au nombre correspondant d'extrémités de câble dénudées (16, 18),
dans lequel
l'entraxe des au moins deux extrémités de câble (16, 18) adjacentes guidées par le dispositif de guidage (20) et/ou une première distance prédéterminée (a1) de la première et deuxième arête de coupe (64, 68) et de la troisième et quatrième arête de coupe (64, 68) correspond sensiblement à l'entraxe prédéterminé des connecteurs de sertissage maintenus sur les bandes de support.

7. Procédé de dénudage simultané d'au moins deux extrémités de câble (16, 18) entourées de matériau isolant, avec les étapes suivantes :
introduction d'au moins deux extrémités de câble (16, 18) s'étendant parallèlement dans un premier plan dans la même direction dans le nombre correspondant d'ouvertures de passage (88), qui s'étendent respectivement par un premier couteau (38) et un deuxième couteau (42) et dont chacune est délimitée par une arête de coupe d'un premier couteau (38) et une arête de coupe d'un deuxième couteau (42), d'un dispositif de coupe (30),
entaillage simultané dans le matériau isolant des extrémités de câble (16, 18) par les arêtes de coupe par déplacement du premier couteau (38) par rapport au deuxième couteau (42) dans une première direction (Y), qui s'étend perpendiculairement à la direction longitudinale des extrémités de câble (16, 18) et parallèlement à ou dans le premier plan, si bien que les ouvertures de passage (88) sont réduites,
dénudage simultané du matériau isolant des extrémités de câble (16, 18) par déplacement intégral des couteaux (38, 42) par rapport aux extrémités de câble (16, 18) dans la direction longitudinale des extrémités de câble (16, 18) ou par déplacement intégral des extrémités de câble (16, 18) par rapport au dispositif de coupe (30) dans la direction longitudinale des extrémités de câble (16, 18).

8. Procédé selon la revendication 7, dans lequel
le matériau isolant est retiré en même temps seulement par déplacement des couteaux (38, 42), avec les autres étapes suivantes :
maintien des extrémités de câble (16, 18) après l'introduction, et/ou
sectionnement complet des extrémités de câble (16, 18) après ou avant le dénudage, et/ou
après l'entaillage du matériau isolant, déplacement du premier couteau (38) par rapport au deuxième couteau (42) dans une direction opposée à la direction d'entaillage du matériau isolant pour ouvrir les couteaux (38, 42) de telle manière que le matériau isolant puisse être retiré sans dommage des conducteurs des extrémités de câble avec les couteaux (38, 42).

9. Procédé de dénudage et de sertissage de deux extrémités de câble (16, 18) entourées de matériau isolant, avec les étapes suivantes
dénudage et/ou coupe des extrémités de câble (16, 18) selon le procédé selon l'une quelconque des revendications 8 ou 9,
insertion d'un nombre de connecteurs de sertissage maintenus sur au moins une bande de support à une distance relative prédéterminée l'un par rapport correspondant au nombre d'extrémités de câble (16, 18) sur un berceau de sertissage multiple sans modification de la distance relative des connecteurs de sertissage,
insertion des extrémités de câble (16, 18) dénudées dans les connecteurs de sertissage sans modifier la position relative des extrémités de câble (16, 18) l'une par rapport à l'autre,
sertissage des connecteurs de sertissage sur les extrémités de câble (16, 18).
